Europäisches Patentamt

**European Patent Office**

**Office européen des brevets**

(11) Numéro de publication: **0 320 844 B1**

# (12) FASCICULE DE BREVET EUROPEEN

(45) Date de publication de fascicule du brevet: **03.11.93**   (51) Int. Cl.⁵: **H04L 1/00**, H04B 7/005

(21) Numéro de dépôt: **88120713.8**

(22) Date de dépôt: **12.12.88**

(54) **Procédé de détection d'effacements affectant une liaison hertzienne numérique et chaîne de réception mettant en oeuvre un tel procédé.**

(30) Priorité: **17.12.87 FR 8717645**

(43) Date de publication de la demande:
**21.06.89 Bulletin 89/25**

(45) Mention de la délivrance du brevet:
**03.11.93 Bulletin 93/44**

(84) Etats contractants désignés:
**DE ES FR GB IT NL SE**

(56) Documents cités:
**FR-A- 2 204 089**
**US-A- 3 568 148**

**BELL SYSTEM TECHNICAL JOURNAL, vol. 61, no. 8, octobre 1982, pages 1911-1917, American Telephone and Telegraph Co., Murray Hill, New Jersey, US; K. JANAC et al.: "The detection of long error bursts during transmission of video signals"**

(73) Titulaire: **ALCATEL TELSPACE**
**5, rue Noel Pons**
**F-92734 Nanterre Cédex(FR)**

(72) Inventeur: **Sadot, Philippe**
**5, Passage Bullourde**
**F-75011 Paris(FR)**

(74) Mandataire: **Weinmiller, Jürgen et al**
**Lennéstrasse 9**
**Postfach 24**
**D-82336 Feldafing (DE)**

EP 0 320 844 B1

## Description

La présente invention se rapporte à un procédé de détection d'effacements affectant une liaison hertzienne numérique et à une chaîne de réception mettant en oeuvre un tel procédé.

Le procédé de l'invention permet de corriger les inconvénients dus à des brouilleurs impulsionnels, intentionnels ou non, affectant des liaisons hertziennes, grâce à l'emploi d'un code correcteur d'erreurs. Plus précisément, l'invention permet la détection immédiate des brouilleurs et la localisation des paquets d'erreurs qu'ils occasionnent dans les trains numériques.

Pendant les périodes d'activité des brouilleurs on considère en général que les liaisons sont coupées, ce qui se traduit au niveau des trains numériques transmis par des paquets d'erreurs. Pour résister à ces brouillages, une parade particulièrement efficace consiste en l'utilisation de codage correcteur d'erreurs et d'entrelacement. On peut encore améliorer les performances du système de codage si l 'on est capable de localiser les paquets d'erreurs au sein du train numérique : le décodeur, instruit de cette information, travaille en reconstitution d'effacements localisés et non en correction d'erreurs aléatoires ; Ses performances sont meilleures.

Le problème est donc de pouvoir localiser les effacements dus au brouilleur. C'est l'objet de l'invention.

Les solutions actuellement connues consistent en l'exploitation d'informations extérieures au train numérique disponibles dans le récepteur : tension de contrôle automatique de gain ou de CAG et niveau de l'"oeil" en sortie du démodulateur avant régénération. Lorsqu'un brouilleur est actif, l'énergie reçue est très grande (en général la puissance du brouilleur est prépondsérante devant celle du signal utile) et pourtant le niveau de l'"oeil" est très faible puisque le signal est noyé dans le bruit apporté par le brouilleur. La comparaison du niveau de la tension de CAG et du niveau de l'"oeil" permet donc de détecter la présence d'un brouilleur.

L'inconvénient essentiel de cette solution réside dans son temps de réponse : la tension de CAG est une tension de boucle, elle a subi une intégration, et la présence du brouilleur est donc détectée avec un retard de plusieurs millisecondes, voire plusieurs dizaines de millisecondes. Pendant ce temps, les effets du brouilleur n'ont pu être efficacement combattus, il subsiste donc dans les trains des paquets d'erreurs incompressibles.

On connaît par le document US-A-3 568 148, une méthode particulière de décodage de codes cycliques, fournissant une information de dépassement éventuel de la capacité de correction du code, mais dont l'application selon ce document est limité à l'utilisation pour des codes cycliques. Un but de la présente invention est d'élargir le champ d'utilisation à des codes linéaires non-cycliques.

On connaît également, par l'article "The Detection of Long Error Bursts During Transmission of Video Signals", par K. JANAC et N.J.A. SLOANE, paru dans Bell System Technical Journal V.61 (8), pp.1911-1917 (1982)., un système de détection de paquets d'erreurs d'une longueur supérieure à 70 erreurs, destiné à protéger un système de correction utilisant un entrelacement et un code de type BCH par exemple. Ce système de détection est fondé sur le calcul de mots ("checksum") entrelacés. La présente invention n'impose pas ces contraintes sur la détection d'erreurs.

L'invention a pour objet de pallier ces inconvénients.

L'invention propose, à cet effet, un procédé de détection d'effacements dans une liaison hertzienne numérique, dans lequel durant une phase d'émission du signal on effectue, avant modulation, un codage de ce signal à l'aide d'un code correcteur d'erreur à faible taux de recouvrement ;
caractérisé en ce que dans une phase de réception de ce signal après démodulation et décodage, on génère une information de dépassement de capacité dudit décodage, et on intègre cette information de dépassement de capacité pour obtenir une information d'effacement, et en ce que le code utilisé est tel que :

- la probabilité ($Pd$) que la capacité de décodage soit dépassée est faible ;
- la probabilité ($Pnd$) de non-dépassement en présence d'un brouilleur est faible ;
- la redondance ($r$) de ce code est faible ;
- le taux de recouvrement ($Rho$) de ce code est faible.

L'invention consiste donc en la détection des brouilleurs par l'examen direct du train numérique démodulé grâce à un code correcteur d'erreur à faible taux de recouvrement. L'avantage essentiel de cette solution est qu'elle permet une détection immédiate du brouilleur dès son apparition. De plus, cette solution entièrement numérique est peu couteuse et particulièrement fiable.

Plus particulièrement, dans le procédé selon l'invention, pour intégrer l'information de dépassement on effectue un comptage-décomptage par une valeur $q$.

Car il peut arriver également que le mot de code reçu comporte tellement d'erreurs qu'il soit proche d'un autre mot qui a été émis ; le décodeur peut alors exécuter un faux décodage.

2

Avantageusement le code utilisé est un code BCH. Pour générer une information de dépassement de capacité du décodage on effectue alors un calcul des "syndromes" du mot régénéré.

Dans une réalisation avantageuse, on utilise le code BCH (255 215, 5), q étant égal à 3, et le taux de recouvrement $\leq 10^{-2}$.

Avantageusement une chaîne de réception mettant en oeuvre le procédé de l'invention, comprend
- un démodulateur ;
- un décodeur ;
- un premier circuit de calcul des syndromes du mot régénéré ;
- un compteur-décompteur ;
- une porte OU ;
- un circuit de remise en phase ;

le signal sortant du décodeur étant également envoyé sur le circuit de remise en phase.

Le décodeur comprend successivement :
- un second circuit de calcul des syndromes ;
- un circuit de calcul d'un algorithme ;
- un circuit de correction,

le premier circuit de calcul des syndromes du mot régénéré comprenant :
- un circuit de calcul proprement dit ;
- un circuit de comparaison des syndromes à zéro qui délivre un signal différent de zéro si tous les syndromes ne sont pas nuls.

Les caractéristiques et avantages de l'invention ressortiront d'ailleurs de la description qui va suivre, à titre d'exemple non limitatif, en référence aux figures annexées sur lesquelles :
- la figure 1 illustre schématiquement une chaîne d'émission mettant en oeuvre le procédé de l'invention ;
- la figure 2 illustre schématiquement une chaîne de réception mettant en oeuvre le procédé de l'invention ;
- la figure 3 illustre plus précisément plusieurs circuits de la chaîne de réception représentée à la figure 2 ;
- la figure 4 représente plusieurs signaux permettant d'illustrer le fonctionnement du procédé selon l'invention.

Dans la description qui va suivre, on considère plus particulièrement des codes BCH. Avec de tels codes, une opération de décodage se fait à l'aide d'un algorithme classique du code employé. Une fois décodé et éventuellement corrigé, le mot régénéré est testé pour vérifier s'il appartient bien au code. Dans un code BCH, on utilise des coefficients nommés "syndromes" du mot régénéré qui sont tous nuls lorsque le mot appartient bien au code.

Un passage du livre de G.C. CLARK et J.B. CAIN, intitulé "Error correction coding and digital communications" (Editions Plenum Press, New-York, pages 188 à 208) concerne un algorithme de décodage des codes B.C.H. (Bose-Chandhuri-Hocquenghem), et en particulier le calcul des syndromes des mots du code.

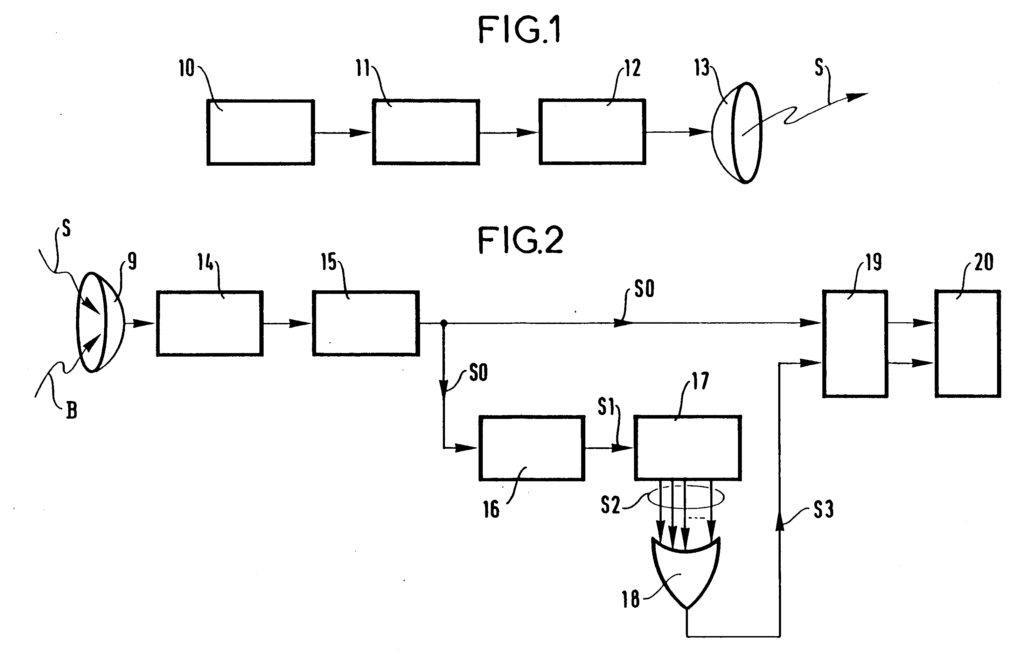

La chaîne d'émission simplifiée, représentée à la figure 1, comprend successivement :
- une source 10 d'information à transmettre ;
- un codeur 11 ;
- un modulateur 12 ;
- une antenne 13 permettant de transmettre le signal S modulé une fois codé.

La chaîne de réception simplifiée représentée à la figure 2 comprend successivement :
- une antenne 9 de réception du signal modulé S et éventuellement d'un signal B émis par un brouilleur ;
- un démodulateur 14 ;
- un décodeur 15 ;
- un premier circuit 16 de calcul des syndromes du mot régénéré ;
- un compteur-décompteur 17 ;
- une porte OU 18 ;
- un circuit 19 de remise en phase ;
- différents circuits 20 usuels d'une telle chaîne de réception.

Le signal So sortant du décodeur est également envoyé sur le circuit 19 de remise en phase.

Comme indiqué précédemment, l'opération de décodage 15 se fait en utilisant l'algorithme classique du code employé. Une fois décodé et éventuellement corrigé, le mot régénéré est testé pour vérifier s'il appartient bien au code (liaison non brouillée) ou non (présence d'un brouilleur). Pour cela, il suffit de recalculer 16 les "syndromes" du mot régénéré. S'ils sont tous nuls, le mot appartient au code, sinon une information de dépassement de capacité est générée.

Cette information est envoyée dans un compteur-décompteur 17 par q à saturation. Les sorties de ce compteur sont envoyées dans une porte OU 18 qui génère un "1" logique lorsque la sortie du compteur 17 est non nulle. Ce signal, remis en phase avec le mot décodé, est envoyé avec celui-ci au reste de la chaîne réception et sera utilisé comme information d'effacement.

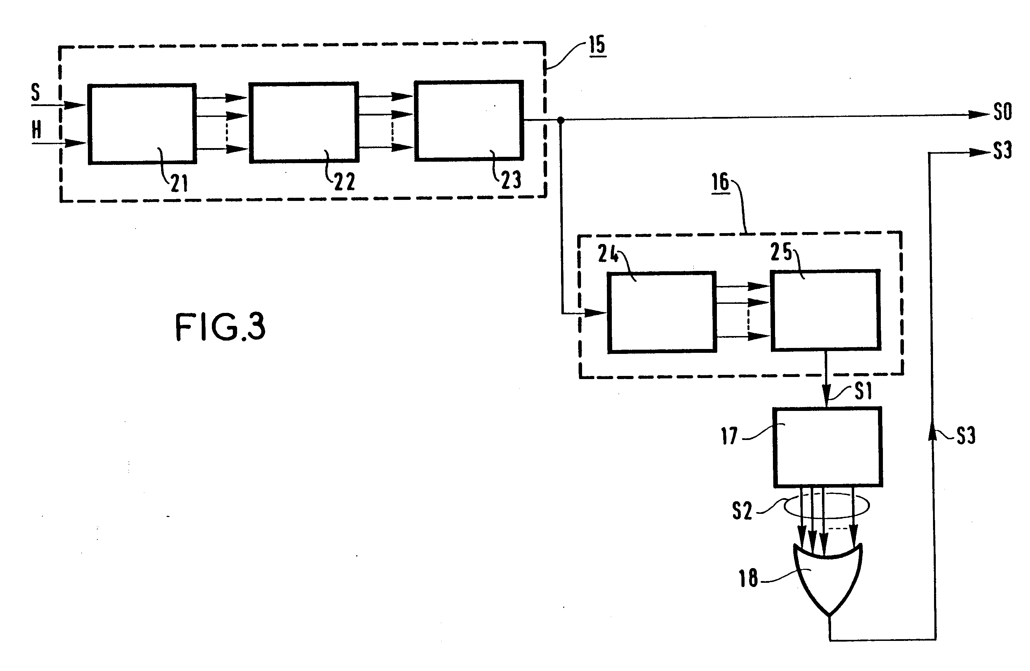

La succession de décodeur 15, premier circuit de calcul des syndromes 16, compteur décompteur 17 et porte OU 18 ont été représentés de manière plus précise à la figure 3.

Le décodeur 15 comprend successivement :
- un second circuit 21 de calcul des syndromes ;
- un circuit 22 de calcul d'un algorithme, par exemple de Berlekamp ;
- un circuit 23 de correction.

Le premier circuit de calcul des syndromes 16 du mot régénéré comprend :
- un circuit 24 de calcul proprement dit ;
- un circuit 25 de comparaison des syndromes à zéro qui délivre un signal différent de zéro si tous les syndromes ne sont pas nuls.

Ainsi en entrée du décodeur on a une voie signal S et une voie horloge H. Après chaque circuit de calcul de syndromes 21 et 24 on obtient t mots de p bits. En sortie du décodeur 15 on obtient le mot corrigé et en sortie de la porte OU, on obtient une information éventuelle d'effacement.

Le procédé de l'invention repose sur l'emploi d'un code interne à faible taux de recouvrement, dont l'algorithme de décodage est capable de se rendre compte si la tentative de décodage a été couronnée de succès (correction des erreurs et régénération d'un mot du code) ou si elle s'est soldée par un échec (régénération d'un mot n'appartenant pas au code).

Soit un code binaire (n,k,t) avec :

n : nombre de bits par mot de code,

k : nombre de bits d'information par mot de code,

t : nombre d'erreurs corrigibles parmi les n bits de chaque mot, dans le cas d'une liaison normale non affectée de brouilleurs, le taux d'erreur est meilleur qu'une valeur garantie : $10^{-5}$ par exemple. On dimensionne alors le code (n, k, t) pour que la probabilité qu'il y ait plus de t erreurs parmi n bits soit arbitrairement faible. En liaison normale, le décodeur n'est donc jamais dépassé. Si l'on appelle Pe la probabilité d'erreur du canal, la probabilité de dépassement de capacité Pd vaut :

$$Pd = 1 - \sum_{j=o}^{t} (n, j) \, Pe^{j} \, (1-Pe)^{n-j}$$

( (n, j) représente le coefficient binomial = n!/j! (n-j)! )

Si maintenant un brouilleur impulsionnel survient, le taux d'erreur en ligne augmente considérablement pendant ses périodes d'activité : on dimensionne alors n, k et t de sorte que la capacité de correction du décodeur soit constamment dépassée. L'algorithme, étant capable de se rendre compte du dépassement de capacité, fournira une information de saturation qui pourra être utilisée par le reste de la chaîne de réception comme une information d'effacement.

La probabilité Pnd que la capacité du décodeur ne soit pas dépassée doit être rendue arbitrairement faible ; si l'on appelle Pb le taux d'erreur créé par le brouilleur pendant ses impulsions, cette probabilité Pnd s'écrit :

$$Pnd = \sum_{j=o}^{t} (n, j) \, Pb^{j} \, (1-Pb)^{n-j}$$

Naturellement, il peut arriver que le mot reçu comporte tellement d'erreurs qu'il soit proche d'un autre mot que celui qui a été émis : le décodeur peut alors exécuter un faux décodage, c'est-à-dire corriger de fausses erreurs et régénérer un autre mot du code. Il faut donc utiliser un code possédant un taux de recouvrement très faible, de sorte que la probabilité d'un tel évènement soit suffisamment faible.

On rappelle que le taux de recouvrement Rho d'un code est le rapport du nombre de mot de n bits corrigibles au nombre total de mots de n bits. Pour un code (n, k, t) il s'écrit :

4

Rho = $2^{k-n}$ (1 + (n, 1) + (n, 2) + .... (n, t))

Il représente en fait la probabilité pour qu'un mot quelconque de n bits soit un élément du code ou soit distinct d'un mot du code en t positions au plus.

Si Rho n'est pas suffisamment petit, il peut se produire qu'un mot de code brouillé soit reconnu comme un mot corrigible et donne lieu par la suite à un faux décodage. Pour éviter cela, on intègre l'information de dépassement de capacité, en l'envoyant par exemple dans un compteur par q, avec saturation au niveau q. L'information d'effacement résulte alors d'un OU de toutes les sorties du compteur ; de la sorte, la probabilité de l'évènement de faux décodage devient $(Rho)^q$, il suffit de dimensionner q pour que cette valeur soit suffisamment faible.

Pour obtenir le meilleur fonctionnement possible, le code selon l'invention doit donc avoir les propriétés suivantes :

- Il doit posséder un faible taux de recouvrement Rho :

Rho = $2^{k-n}$ (1 + (n, 1) + (n, 2) + .... (n, t))

Par exemple pour le code BCH (255, 207, 6), Rho est voisin de $10^{-3}$. cela signifie qu'en présence d'un brouilleur un mot sur mille sera considéré comme correctement décodé alors qu'en fait un faux décodage se sera produit. Les codes BCH possèdent des taux de recouvrement qui décroissent vite avec n, à redondance donnée. Par exemple le code BCH (1023, 943, 8) a un taux de recouvrement de l'ordre de $10^{-5}$, pour un taux de redondance de 1.08. Dans de tels codes à faible taux de recouvrement l'apparition de deux faux décodages successifs est pratiquement impossible.

- Il faut que le décodeur ne soit pas dépassé lorsque la liaison n'est pas brouillée : si on suppose que le taux d'erreur sur la ligne est Pe en conditions normales, la probabilité Pd que la capacité de décodage soit dépassée doit être arbitrairement faible :

$$Pd = 1 - \sum_{j=o}^{t} (n, j)\, Pe^{j}\, (1-Pe)^{n-j} < epsilon$$

epsilon = $10^{-6}$ par exemple.

- Il faut qu'en présence d'un brouilleur, responsable d'un taux d'erreur Pb pendant ses périodes d'activité, le code soit toujours dépassé : pnd = probabilité de non dépassement en présence d'un brouilleur

$$pnd = \sum_{j=o}^{t} (n, j)\, Pb^{j}\, (1-Pb)^{n-j} < epsilon$$

- enfin, afin de ne pas pénaliser la liaison on a intérêt à ce que la redondance r du code soit faible.

r = n/k petit (par exemple r < 1.1)

Des codes existent qui satisfont à ces conditions.
Prenons par exemple les hypothèses suivantes :
Pe = $10^{-5}$
Pb = $10^{-2}$
epsilon = $10^{-6}$
Code BCH (255, 215, 5) :
Pd = $3.10^{-19}$
Pnd = $3.8\ 10^{-7}$
Rho = $10^{-2}$
Taille du compteur : q = 3
pour obtenir $(Rho)^3 < epsilon = 10^{-6}$.

Dans un exemple de mise en oeuvre du procédé selon l'invention, on a :

- débit du signal : 2,340 Mbits/s (Faisceau hertzien par exemple)
- code BCH (255, 215)
- débit du signal module :

$$\frac{2,340 \times 255}{215} = 2,775 \text{ Mbits/s}$$

- brouilleur (B) : impulsion de 5 millisecondes.
On a donc 13875 bits qui sont effacés, et donc

$$\frac{13875}{255} = 55 \text{ mots}$$

qui sont effacés
- on utilise par exemple un décompteur par 3.

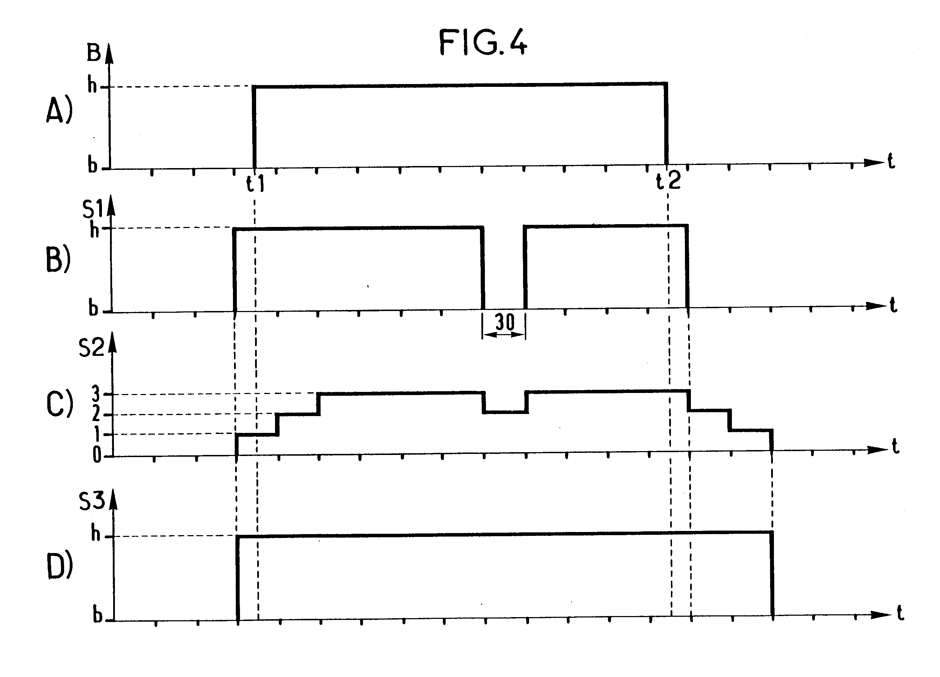

La figure 4 (A, B, C, D) illustre schématiquement quatre signaux apparaissant en divers points de la chaîne de réception illustrée en figures 2 et 3.

Le signal B révèle schématiquement la présence (niveau haut h entre un instant t1 et un instant t2) ou l'absence (niveau bas b) d'un brouilleur.

Le signal S1 donne une information de dépassement (niveau haut h) ou de non dépassement de capacité (niveau bas b).

Le signal S2 correspond à la sortie du compteur par 3 à saturation

Le signal S3 donne une information d'effacement (niveau haut h) ou de non-effacement (niveau bas b).

Sur cette figure un carreau sur l'abscisse des temps correspond à un mot de code émis.

En présence d'un signal B émis par un brouilleur, on obtient une information de dépassement de capacité S1, mais il y a un faux décodage 30, le signal S1 étant nul alors que le signal B est toujours présent.

En sortie du compteur-décompteur 17 par trois on obtient le signal S2, et en sortie de la porte OU 18 le signal S3 dans lequel le faux décodage 30 a été corrigé.

Du fait du traitement 19, il y a eu remise en phase des signaux par rapport aux mots de bits émis.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

Ainsi un code autre que BCH pourrait être utilisé.

## Revendications

1. Procédé de détection d'effacements dans une liaison hertzienne numérique, dans lequel durant une phase d'émission du signal on effectue, avant modulation, un codage de ce signal à l'aide d'un code correcteur d'erreur à faible taux de recouvrement ;
caractérisé en ce que dans une phase de réception de ce signal après démodulation et décodage, on génère une information de dépassement de capacité dudit décodage en effectuant un calcul des syndromes du mot régénéré, et on intègre cette information de dépassement de capacité, en effectuant un comptage-décomptage par une valeur q, pour obtenir une information d'effacement, et en ce que le code utilisé est tel que :
   - la probabilité (Pd) que la capacité de décodage soit dépassée est inférieure à $10^{-6}$ ;
   - la probabilité (Pnd) de non-dépassement en présence d'un brouilleur est inférieure à $10^{-6}$ ;
   - la redondance (r) de ce code est inférieure à 1.1 ;
   - le taux de recouvrement (Rho) de ce code est inférieur ou égal à $10^{-2}$.

2. Procédé selon la revendication 1, caractérisé en ce que le code utilisé est un code BCH.

3. Procédé selon la revendication 2, caractérisé en ce que le code utilisé est le code BCH (255, 215, 5), et en ce que q est égal à 3.

6

4. chaîne de réception mettant en oeuvre le procédé selon l'une quelconque des revendications précédentes, caractérisée en ce qu'elle comprend
   - un démodulateur (14) ;
   - un décodeur (15) comprenant successivement :
     . un second circuit (21) de calcul des syndromes ;
     . un circuit (22) de calcul d'un algorithme ;
     . un circuit (23) de correction ;
   - un premier circuit (16) de calcul des syndromes comprenant
     . un circuit (24) de calcul proprement dit ;
     . un circuit (25) de comparaison des syndromes à zéro, qui délivre un signal différent de zéro si tous les syndromes ne sont pas nuls ;
   - un compteur-décompteur (17) ;
   - une porte OU (18) ;
   - un circuit (19) de remise en phase ;

le signal So sortant du décodeur étant également envoyé sur le circuit (19) de remise en phase.


## Claims

1. A method of detecting erasures in a digital radio link, conveying a signal which is encoded prior to modulation and transmission of the signal by means of an error correcting code having a low covering radius; the method being characterized in that during reception, said signal is demodulated and decoded and a capacity-exceeded flag signal is generated whenever the decoding error correcting capacity is exceeded by calculating of the syndromes of the regenerated word, and said capacity-exceeded flag signal is integrated, by means of divide-by-q up/down counting, in order to obtain an erasure flag signal, and in that the code used is a code such that:

   the probability (Pd) of the decoding capacity being exceeded is less than 10-6;

   the probability (Pnd) of error correcting capacity not being exceeded in the presence of jamming is less than 10-6;

   the redundancy (r) of the code is less than 1.1; and

   the covering radius (Rho) of the code is less than or equal to 10-2.

2. A method according to claim 1, characterized in that the the code used is a BCH code.

3. A method according to claim 2, characterized in that the code used is the BCH code (255, 215, 5), and in that it is equal to 3.

4. A receiver system for implementing the method according to any preceding claim, characterized in that it comprises in succession:

   a demodulator (14);

   a decoder (15); comprising successively:

   a second circuit (16) for calculating syndromes;

   a circuit (22) for calculating an algorithm;

   a correction circuit (23);

   a first circuit (16) for calculating syndromes comprising:

   a circuit (24) for performing the calculation per se;

   a circuit (25) for comparing the syndromes with zero and for delivering a non-zero flag signal unless all of the syndromes are zero.

   an up/down counter (17);

   an OR gate (18); and

   a synchronizing circuit (19);

   with the signal SO from the decoder also being applied to the synchronizing circuit (19).


## Patentansprüche

1. Verfahren zur Erfassung von Störungen bei einer digitalen Funkverbindung, bei der während einer Sendephase des Signals vor der Modulation eine Kodierung dieses Signals mit Hilfe eines Fehlerkorrekturkodes mit geringem Überdeckungsgrad durchgeführt wird,
   dadurch gekennzeichnet, daß man in einer Empfangsphase dieses Signals nach der Demodulation und Dekodierung eine Information betreffend die Überschreitung der Dekodierungskapazität durch Berechnung der Syndrome des regenerierten Wortes erzeugt, und daß man diese Kapazitätsüberschreitungsinformation durch eine Aufwärts-Abwärtszählung modulo q integriert, um eine Störungsinformation zu erhalten, und daß der benutzte Kode solcher Art ist, daß

- die Wahrscheinlichkeit (Pd), daß die Dekodierungskapazität überschritten wird, kleiner als $10^{-6}$ ist,
- die Wahrscheinlichkeit (Pnd), daß die Kapazität bei Vorhandensein eines Störsenders nicht überschritten wird, kleiner als $10^{-6}$ ist,
- die Redundanz (r) des Kodes kleiner als 1,1 ist, und
- der Überdeckungsgrad (Rho) dieses Kodes kleiner oder gleich $10^{-2}$ ist.

2. Verfahren nach Anspruch 1, dadurch gekennzeichnet, daß der benutzte Kode ein BCH-Kode ist.

3. Verfahren nach Anspruch 2, dadurch gekennzeichnet, daß der benutzte Kode der BCH-Kode (255, 215, 5) ist, und daß q = 3 ist.

4. Empfangskette zur Durchführung des Verfahrens gemäß einem beliebigen der vorhergehenden Ansprüche, dadurch gekennzeichnet, daß sie enthält:
   - einen Demodulator (14),
   - einen Dekodierer (15), der nacheinander aufweist
     . eine zweite Schaltung (21) zur Berechnung der Syndrome,
     . eine Schaltung (22) zur Berechnung eines Algorithmus,
     . eine Korrekturschaltung (23);
   - eine erste Schaltung (16) zur Berechnung der Syndrome, mit
     . einer eigentlichen Berechnungsschaltung (24),
     . einer Schaltung (25) zum Vergleichen der Nullsyndrome, die ein von null verschiedenes Signal liefert, wenn nicht alle Syndrome null sind;
   - einen Aufwärts-Abwärtszähler (17);
   - ein ODER-Tor (18);
   - eine Phasenrückstellschaltung (19);
   wobei das vom Dekodierer ausgegebene Signal So auch an die Phasenrückstellschaltung (19) geliefert wird.

# FIG.1

# FIG.2

EP 0 320 844 B1

EP 0 320 844 B1

FIG.3

S → 
H → 

21   22   23   → S0 → S3

15

16

24   25

→ S1

17

S2

18

→ S3

FIG.4

EP 0 320 844 B1